# EUROPÄISCHE PATENTSCHRIFT

(11) **EP 4 132 836 B1**
(45) Veröffentlichungstag und Bekanntmachung des Hinweises auf die Patenterteilung: **27.03.2024**
(21) Anmeldenummer: 21717773.2
(22) Anmeldetag: 01.04.2021
(51) Int. Cl.: B62D 1/18, B60R 16/02

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 09.04.2020 DE 102020204591
(43) Veröffentlichungstag der Anmeldung: 15.02.2023
(73) Patentinhaber: thyssenkrupp Presta AG, 9492 Eschen (LI); thyssenkrupp AG, 45143 Essen (DE)
(72) Erfinder: PALTINISANU, Ciprian, 9492 Eschen (LI); WIEDMANN, Julian, 9400 Rorschach (CH)
(74) Vertreter: thyssenkrupp Intellectual Property GmbH
(86) Internationale Anmeldenummer: PCT/EP2021/058564
(87) Internationale Veröffentlichungsnummer: WO 2021/204647

(56) Entgegenhaltungen:
- JP-A- 2008 207 612
- JP-A- 2008 222 050
- KR-A- 20180 065 100
- US-B2- 7 275 458

## Beschreibung

### Stand der Technik

Die Erfindung betrifft eine Lenksäule für ein Kraftfahrzeug, umfassend eine zumindest abschnittweise aus elektrisch leitendem Material ausgebildete Stelleinheit, in der eine Lenkspindel um eine Längsachse drehbar gelagert ist, wobei die Stelleinheit an einem Schwenklager um eine quer zur Längsachse liegende, mit dem Kraftfahrzeug elektrisch leitend verbindbaren Schwenkachse verschwenkbar gelagert ist, die sich durch eine elektrisch isolierte Lageröffnung eines Lagerträgers der Stelleinheit erstreckt und über ein elektrisch leitfähiges Leiterelement mit der Stelleinheit verbunden ist.

Eine gattungsgemäße verstellbare Lenksäule ermöglicht eine Höhenverstellung eines am hinteren Ende der Lenkspindel angebrachten Lenkrads durch eine Einstellung der Neigung der Lenksäule relativ zur Fahrzeugkarosserie zur Anpassung der Lenkradposition an die Sitzposition des Fahrers eines Kraftfahrzeugs. Zur Höhenverstellung ist die Stelleinheit, in der die Lenkspindel in einem Mantelrohr drehbar gelagert ist, um eine horizontale Schwenkachse an einer mit der Karosserie angebrachten Trageinheit verschwenkbar gelagert.

Die Schwenkachse ist in einer Lagerung in einem Lagerträger des Mantelrohrs drehbar gelagert.

An der Stelleinheit sind elektrische Schalt- und Bedienelemente angebracht, beispielsweise manuell bedienbare Lenkstockschalter und gegebenenfalls in das Lenkrad integrierte Schalter. Die Schalter sind in Stromkreise des elektrischen Bordnetzes eingegliedert, bei dem die elektrische Masse mit der metallischen Fahrzeugkarosserie verbunden ist. Die Masseverbindung der besagten Schaltelemente mit der Karosserie erfolgt bei einer gattungsgemäßen Lenksäule über metallische, elektrisch leitend miteinander verbundene Teile der Stelleinheit, beispielsweise das Mantelrohr, und die Trageinheit.

Um eine leichtgängige und wartungsarme Verstellung zu ermöglichen, ist es beispielsweise aus der JP 2008 222 050 A1 bekannt, die metallische Schwenkachse in einer Lagerbuchse aus einem Kunststoff in einer Lageröffnung des metallischen Lagerträgers zu lagern. Dadurch, dass der Kunststoff elektrisch nichtleitend ist, ist die Schwenkachse durch die Lagerbuchse in der Lageröffnung zum Lagerträger elektrisch isoliert. Zur Erzeugung einer Masseverbindung ist daher ein zusätzliches Leiterelement vorgesehen, welches den metallischen Lagerträger und die Schwenkachse elektrisch leitend verbindet. Das Leiterelement ist als separates Bauteil aus elektrisch leitendem Material, beispielsweise als metallische Blechlasche, ausgeführt, welches außerhalb der isolierenden Lagerbuchse elektrisch leitend an der Stelleinheit montiert ist und die Schwenkachse mit einem Schleifkontakt elektrisch kontaktiert. Nachteilig ist die aufwendige Fertigung und Montage des Leiterelements, und dass zwei mechanische Kontaktstellen vorhanden sind, nämlich zwischen dem Leiterelement und dem Lagerträger der Stelleinheit und zwischen dem Leiterelement und der Schwenkachse, wodurch potentiell nachteilige erhöhte elektrische Übergangswiderstände auftreten können.

Angesichts der vorangehend erläuterten Problematik ist es eine Aufgabe der vorliegenden Erfindung, eine verstellbare Lenksäule mit einer verbesserten elektrischen Masseverbindung anzugeben, die weniger aufwendig ist und eine bessere elektrische Verbindung ermöglicht.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine zumindest abschnittweise aus elektrisch leitendem Material ausgebildete, mit einem elektrischen Kraftfahrzeug-Bordnetz elektrisch verbindbare Stelleinheit, in der eine Lenkspindel um eine Längsachse drehbar gelagert ist, wobei die Stelleinheit an einem Schwenklager um eine quer zur Längsachse liegende, mit dem Kraftfahrzeug elektrisch leitend verbindbaren Schwenkachse verschwenkbar gelagert ist, die sich durch eine elektrisch isolierte Lageröffnung eines Lagerträgers der Stelleinheit erstreckt und über ein elektrisch leitfähiges Leiterelement mit der Stelleinheit verbunden ist, ist erfindungsgemäß vorgesehen, dass das Leiterelement einstückig mit dem Lagerträger ausgebildet ist.

Erfindungsgemäß ist das Leiterelement integral mit dem Lagerträger ausgebildet, und wird aus einem integrierten Abschnitt des leitfähigen Materials gebildet, aus dem der Lagerträger selbst ausgebildet ist, beispielsweise aus einem metallischen Werkstoff wie Stahl oder dergleichen. Dadurch, dass das Leiterelement zusammen mit dem Lagerträger ein integriertes Bauteil bildet, fällt im Vergleich mit dem oben genannten Stand der Technik die separate Fertigung und Montage des Leiterelements weg, wodurch in vorteilhafter Weise der Fertigungs- und Montageaufwand verringert werden kann.

Die Stelleinheit ist bevorzugt derart ausgebildet, dass diese mit einem elektrischen Kraftfahrzeug-Bordnetz elektrisch verbindbar ist.

Besonders bevorzugt ist das Leiterelement integral einstückig mit dem Lagerträger ausgebildet ist. Dadurch kann die Komplexität weiter vereinfacht werden.

In einer vorteilhaften Weiterbildung kann es vorgesehen sein, dass die Schwenkachse mit der Fahrzeugkarosserie elektrisch leitend verbindbar ist. Die Fahrzeugkarosserie kann einen Fahrzeugquerträger umfassen. Zur Verbindung kann ein Fixiermittel, beispielsweise eine Schraube zum Einsatz kommen. Somit ist nach der Verbindung der Schwenkachse an der Fahrzeugkarosserie auch die elektrische Verbindung zwischen der Schwenkachse und der Fahrzeugkarosserie hergestellt, so dass dank der erfindungsgemäßen Ausführung des Leiterelements die elektrische Verbindung zur Stelleinheit bereitgestellt ist.

Bevorzugt ist die Stelleinheit mit einer Trageinheit gekoppelt, wobei die Trageinheit mit der Schwenkachse elektrisch leitend verbunden ist.

Ein weiterer Vorteil ist, dass durch die erfindungsgemäß einstückige Ausführung kein zusätzlicher mechanischer Kontakt zwischen dem Lagerträger und dem Leiterelement vorhanden ist, wodurch an dieser Stelle ein potentiell schädlicher Übergangswiderstand der Masseverbindung vermieden und die elektrische Leitfähigkeit verbessert wird. Die Stelleinheit ist über den Lagerträger, das Leiterelement, die Schwenkachse und die Trageinheit elektrisch leitend mit der Fahrzeugkarosserie verbunden, die mit der elektrischen Masse des Kraftfahrzeug-Bordnetzes verbunden ist.

Der Lagerträger ist elektrisch leitend mit der Stelleinheit verbunden, und kann hierzu elektrisch leitend, bevorzugt fest, mit einem Mantelrohr der Stelleinheit verbunden sein, in dem die Lenkspindel drehbar gelagert ist. Die leitende Verbindung mit dem bevorzugt aus einem metallischen Werkstoff wie Stahl oder dergleichen gebildeten Mantelrohr kann stoff-, kraft- und/oder formschlüssig elektrisch gut leitfähig erfolgen, beispielsweise durch Verschweißung oder flächig aneinander anliegende elektrisch leitende Kontaktflächen. Es ist ebenfalls denkbar, dass der Lagerträger einstückig mit einem Mantelrohr ausgebildet ist.

Das Mantelrohr, welches den Lagerträger aufweist, kann ein äußeres Mantelrohr oder Außenmantel einer Manteleinheit sein, in der ein oder mehrere innere Mantelrohre oder Innenmantelrohre teleskopartig in Längsrichtung verstellbar angeordnet sein können. Dadurch kann die Lenksäule zur Realisierung einer Längsverstellung in Richtung der Längsachse verstellbar ausgestaltet sein. Die teleskopierbaren, längenverstellbaren Mantelrohre können bevorzugt elektrisch leitend miteinander verbunden sein. Bei einer längenverstellbaren Lenksäule kann die Lenkspindel ebenfalls teleskopartig relativ zueinander verstellbare Abschnitte aufweisen.

Die Lenkspindel kann in einem oder mehreren der Mantelrohre um die Längsachse drehbar gelagert sein, beispielsweise in Wälzlagern. Über die Wälzlager kann eine elektrisch leitende Masseverbindung mit der Lenkspindel ausgebildet sein.

Bevorzugt kann vorgesehen sein, dass der Lagerträger ein metallisches Blechformteil aufweist, und das Leiterelement eine Blechlasche aufweist. Das Blechformteil kann als Blech-Stanz-Biegeteil, beispielsweise aus Stahlblech, rationell gefertigt werden und weist eine für die Masseverbindung hinreichende elektrische Leifähigkeit auf. Das Leiterelement kann einfach bei der Fertigung durch eine bevorzugt laschen- oder zungenförmige Ausformung einstückig mit dem Blechformteil realisiert werden. Diese Ausformung kann einfach plastisch umgeformt werden, beispielsweise durch Umbiegen, um die Schwenkachse elektrisch leitend zu kontaktieren. Dabei wird der Fertigungsaufwand gegenüber einem nach dem Stand der Technik bekannten Lagerträger nicht oder nicht merklich erhöht, so dass der Fertigungs- und Montageaufwand zur Bereitstellung des Leiterelements deutlich verringert werden kann.

Der Lagerträger, beispielsweise das vorgenannte Blechformteil, kann durch geeignete Fügeverfahren elektrisch leitend mit einem äußeren Mantelrohr einer Stelleinheit verbunden sein, beispielsweise über stoff-, form- und/oder kraftschlüssig zusammengefügte, blanke metallische Oberflächen.

Der Lagerträger kann einen radial von dem Mantelrohr abstehenden Arm oder eine Lagerkonsole umfassen, welche das Schwenklager aufweist und die durch eine Fügeverbindung mit dem Mantelrohr verbunden ist. Es ist gleichfalls möglich, dass das Mantelrohr einen schwenkbar an der Trageinheit gelagerten Führungskasten aufweist, in dem der Lagerträger mit der Lageröffnung einstückig integriert ist. Ein derartiger Führungskasten kann samt Lagerträger und Leiterelement als einstückiges Blechformteil ausgebildet sein, wodurch Fertigung und Montage weiter vereinfacht werden können.

Die das Leiterelement bildende Blechlasche oder -zunge kann bevorzugt langgestreckt streifenförmig ausgebildet sein. Dieser Blechstreifen kann an seinem einen Ende einstückig mit dem Lagerträger verbunden sein, und mit seinem anderen, freien Ende von dem Lagerträger abstehen, und dort mit einem Kontaktbereich die Schwenkachse leitfähig kontaktieren.

Es ist auch denkbar und möglich, dass das einstückig mit dem Lagerträger ausgebildete Leiterelement zusätzlich oder alternativ die Trageinheit direkt elektrisch leitend kontaktiert.

Bevorzugt kann das Leiterelement elastisch federnd ausgebildet sein. Das Leiterelement kann derart zwischen dem Lagerträger und der Schwenkachse elastisch verspannt sein, dass es mit seinem Kontaktbereich mit Federspannung federbelastet an der Schwenkachse anliegt. Durch die Federspannung wird der Kontaktbereich des Leiterelements mit einer vorgegebenen Kontaktkraft angepresst, so dass eine sichere elektrische Masseverbindung mit geringem Übergangswiderstand bzw. Kontaktwiderstand erzeugt wird.

Zur Realisierung der vorgenannten Ausführung kann das Leiterelement als Blechlasche oder -zunge ausgebildet sein, wobei das freie Ende mit dem Kontaktbereich quer zu ihrer Längserstreckung federnd biegbar ist, ähnlich einer einseitig eingespannten Blattfeder. Die Ausgestaltung des Lagerträgers als Blechformteil hat dabei den Vorteil, dass die geforderten elastischen Eigenschaften des Leiterelements einfach durch Form und Abmessungen der Blechlasche oder -zunge vorgegeben werden können.

Bevorzugt kann sich das laschen- oder zungenartige Leiterelement von dem Lagerträger bis in den Durchgangsquerschnitt der Schwenkachse erstrecken. Beim Einsetzen der Schwenkachse in Achsrichtung durch die Lageröffnung wird das freie Ende des Leiterelements von der Schwenkachse quer zur Einsetzrichtung seitlich verdrängt bzw. elastisch gebogen, so dass es mit einem Kontaktbereich durch die dabei erzeugte Federspannung von außen quer zur Achsrichtung an der Schwenkachse anliegt und diese leitend kontaktiert.

Es ist möglich, dass das Leiterelement von dem Lagerträger mit Abstand zur Schwenkachse um eine quer zur Schwenkachse liegende Biegekante umgebogen ist. Vorzugsweise kann diese Ausführung bei einem Blechformteil, bevorzugt aus Stahl- oder Federstahlblech, realisiert sein. Das Leiterelement kann als langgestreckte, bevorzugt federelastische Blechlasche oder -zunge ausgebildet werden, die in der Nähe einer Lageröffnung von dem Lagerträger in Richtung auf die Schwenkachse zu umgebogen ist. Die Blechlasche bildet dann eine Art einseitig mit der Lagerträger fest verbundene Blattfeder. Die Seitenkanten der langgestreckten Blechlasche können im Wesentlichen parallel zur Schwenkachse verlaufen. Dadurch, dass die Blechlaschen um einen Biegewinkel von mehr als 90°, und bevorzugt weniger als 135° bezogen auf die Ebene der Lageröffnung umgebogen ist, ist das Leiterelement von außen schräg gegen die Schwenkachse gerichtet. Der Biegewinkel kann bevorzugt derart auf den Abstand der Biegekante von der Schwenkachse, den Außendurchmesser der Schwenkachse und die Länge des Leiterelements abgestimmt sein, dass das Leiterelement mit einem Kontaktabschnitt im Bereich seines frei vorstehenden Endes unter spitzem Winkel, d.h. flach geneigt von außen gegen die Schwenkachse anliegt. Eine derartige Anordnung ist unkompliziert zu fertigen und zu montieren, und das streifenförmige Leiterelement wird in sich nur leicht elastisch gebogen, um die erforderliche Kontaktkraft, mit der es federnd gegen die Schwenkachse angepresst wird, dauerhaft und zuverlässig zu erzeugen.

Bevorzugt kann vorgesehen sein, dass der Lagerträger zwei einander bezüglich der Längsachse gegenüberliegende Seitenschenkel aufweist, durch die sich die Schwenkachse erstreckt. Jeder der Seitenschenkel weist eine quer zur Längsachse durchgehende Lageröffnung auf, durch die die Schwenkachse hindurchgeführt ist. Durch den Abstand der Seitenschenkel, die größer sein kann als die Querabmessung oder der äußere Durchmesser der Stelleinheit, kann eine dreh-und querstabile Lagerung erzeugt werden. Dabei kann das Leiterelement vorzugsweise zwischen den Seitenschenkeln angeordnet sein. Insbesondere ist es möglich, dass die Seitenschenkel als Blechformteile ausgebildet sind, und sich das Leiterelement als Blechlasche von mindestens einem der Seitenschenkel schräg gegen die Schwenkachse umgebogen zwischen den beiden Seitenschenkeln erstreckt. Dadurch kann das Leiterelement geschützt angeordnet sein.

Es ist vorteilhaft, dass die Schwenkachse in dem Lagerträger in mindestens einer elektrisch isolierenden Lagerbuchse gelagert ist. Eine isolierende Lagerbuchse weist eine elektrische Leitfähigkeit auf, die bevorzugt geringer ist als 1000000 Siemens pro Meter (S/m), besonders bevorzugt geringer als 10000 Siemens pro Meter. Bevorzugt kann eine Lagerbuchse aus einem Kunststoff ausgebildet sein, der mit Metall eine gut gleitfähige Lagerpaarung bildet, die dabei langfristig verschleißarm ist, beispielsweise aus Polytetrafluorethylen (PTFE), Polyamid (PA), Polyoxymethylene (POM), Polyetheretherketon (PEEK) oder dergleichen. Die durch die Lagerbuchse erzeugte elektrisch isolierte Lagerung wird durch das erfindungsgemäße Leitelement elektrisch überbrückt. Jeweils eine Lagerbuchse kann in einem Seitenschenkel des Lagerträgers in eine Lageröffnung eingesetzt sein, und an mindestens einem der Seitenschenkel kann ein Leiterelement als einstückig umgebogener Leiterstreifen ausgebildet sein.

Bevorzugt kann die Schwenkachse rohrförmig ausgebildet sein. Durch den Durchgang kann ein axiales Spannelement, beispielsweise ein Spannbolzen als Befestigungsmittel hindurchgeführt sein. Ein Spannbolzen ist bevorzugt als Schraube ausgebildet und weist ein Gewinde auf. Mittels des Spannbolzens kann die Spannachse an der Trageinheit oder direkt an der Fahrzeugkarosserie festgelegt sein, beispielsweise zwischen zwei gegeneinander verspannten Seitenwangen, die von der Trageinheit oder von der Fahrzeugkarosserie nach unten vorstehen, und sich bezüglich der Längsachse gegenüberliegen. Um dabei eine spielhaltige, leicht verstellbare Anordnung des Lagerträgers zu gewährleisten, kann die Schwenkachse axial nach außen über die Lageröffnungen bzw. die darin eingesetzten Lagerbuchsen axial vorstehen, so dass ein axiales Spiel zwischen den Seitenwangen und dem Lagerträger freigehalten wird, wenn die Schwenkachse stirnseitig fest zwischen den Seitenwangen des Tragelements eingespannt wird.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer weiteren perspektivischen Ansicht,
- Figur 3: eine axiale Ansicht der Lenksäule gemäß Figur 1 und 2,
- Figur 4: eine Schnittansicht durch das erfindungsgemäße Schwenklager der Lenksäule gemäß Figuren 1 bis 3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

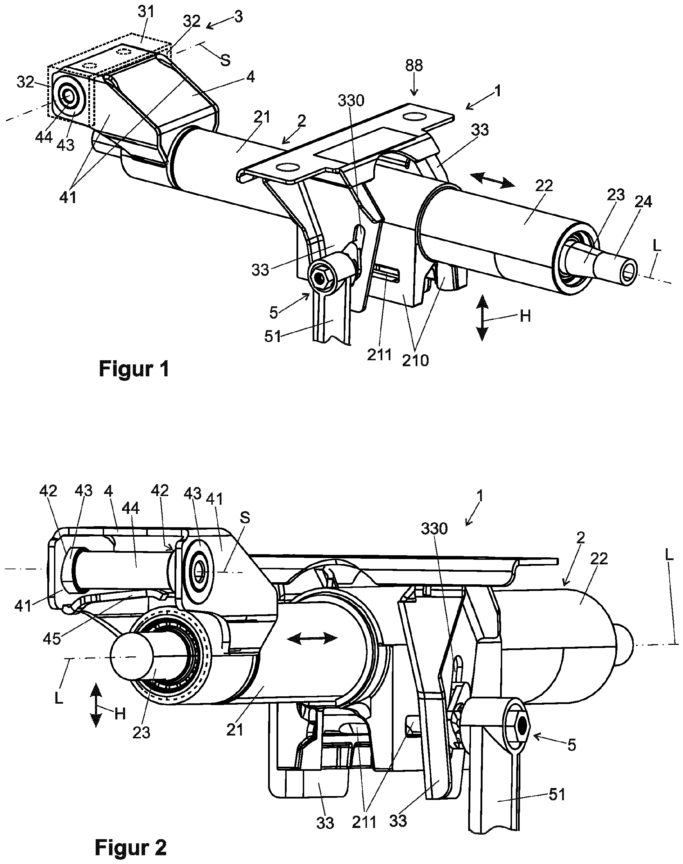

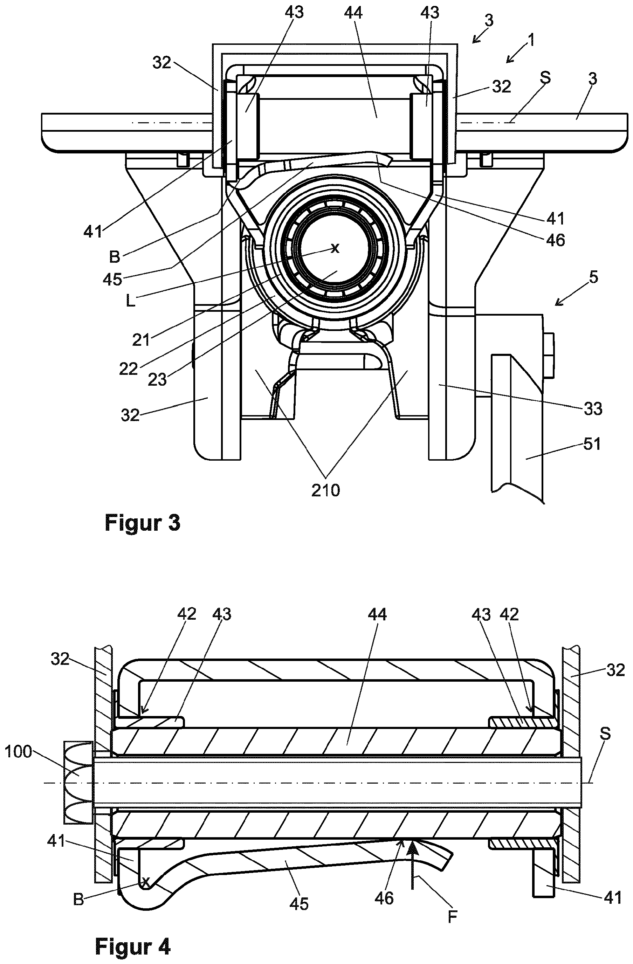

Figuren 1, 2 und 3 zeigen jeweils eine Lenksäule 1 als Ganzes, und zwar Figur 1 in einer perspektivischen Ansicht bezogen auf die Fahrtrichtung schräg von hinten, Figur 2 von derselben Seite schräg von vorn, und Figur 3 in einer Axialansicht bezüglich einer Längsachse L von hinten.

Die Lenksäule 1 umfasst eine Stelleinheit 2, mit einem inneren Mantelrohr 21 oder Innenmantelrohr, im Folgenden kurz Mantelrohr 21 genannt, einem Außenmantelrohr 22 und einer darin um die Längsachse L drehbar gelagerten Lenkspindel 23, die an ihrem hinteren Ende einen Befestigungsabschnitt 24 zur Anbringung eines nicht dargestellten Lenkrads aufweist. Das Außenmantelrohr 22 nimmt zur Längsverstellung das Mantelrohr 21 auf und ist gegenüber diesem in Längsrichtung der Längsachse L teleskopartig verstellbar, wie mit dem Doppelpfeil angedeutet.

Eine mit einer hier nicht dargestellten Karosserie eines Kraftfahrzeugs verbindbare Trageinheit 3 umfasst eine bügelförmige Konsole 31 mit zwei nach unten vorstehenden, einander bezüglich der Längsachse L gegenüberliegenden Seitenwangen 32. Die Trageinheit 3 ist elektrisch leitend mit der elektrischen Masse des Kraftfahrzeug-Bordnetzes verbunden, die an der Fahrzeugkarosserie anliegt. Zur verbesserten Darstellung ist die Trageinheit 3 gestrichelt dargestellt. Die Trageinheit 3 kann entweder Teil der Lenksäule 1 sein oder alternativ kann es vorgesehen sein, dass diese ein Bestandteil der Fahrzeugkarosserie ist. In einer nicht dargestellten Ausführungsform kann die Trageinheit 3 zusammen mit einem Fahrzeugquerträger ein einstückiges Bauteil bilden.

An dem Mantelrohr 21 ist ein Lagerträger 4 fest angebracht, der als Blechformteil, bevorzugt aus Stahlblech, gefertigt ist und über eine elektrisch leitfähige Fügeverbindung mit dem ebenfalls bevorzugt aus Stahl gefertigten Mantelrohr 21 verbunden ist, bevorzugt durch eine Schweißoperation insbesondere durch eine Laserschweißoperation.

Der Lagerträger 4 weist zwei einander bezüglich der Längsachse L gegenüberliegende Seitenschenkel 41 auf. Bezüglich einer quer zur Längsachse L liegenden Querachse S sind in den Seitenschenkeln 41 in Achsrichtung fluchtende Lageröffnungen 42 eingebracht, in die aus elektrisch isolierendem Kunststoff ausgebildete Lagerbuchsen 43 eingesetzt sind. In den Lagerbuchsen 43 ist eine rohrförmige Schwenkachse 44 um die Achse S drehbar gelagert. Dadurch wird ein Schwenklager gebildet, in dem die Stelleinheit 2 zur Höhenverstellung des Lenkrads um die Achse S in Höhenrichtung H verschwenkbar ist, wie in Figur 1 mit dem Doppelpfeil angedeutet ist.

Die Schwenkachse 44 besteht aus elektrisch leitendem Material, bevorzugt aus Stahl.

Weiterhin weist die Lenksäule 1 eine Halteklammer 88 auf, die Befestigungsöffnungen zur Befestigung der Halteklammer 88 an der Kraftfahrzeugkarosserie aufweist. Das Außenmantelrohr 22 weist einen Klemmbackenabschnitt 210 mit jeweils einem Langloch 211 in Längsrichtung auf. Zur Fixierung der Höhenverstellung weist die Halteklammer 88 zwei nach unten vorstehende, Seitenwangen 33 auf, zwischen denen d der Klemmbackenabschnitt 210 des Außenmantelrohrs 22 angeordnet ist. Die Seitenwangen 33 umfassen Langlöcher 330 zur Höhenverstellung, die sich entsprechend winklig zu der Längsachse L erstrecken.

Eine Spanneinrichtung 5, die an den Seitenwangen 33 angreift kann durch Betätigung eines Spannhebels 51, der mit einem Spanngetriebe zusammenwirkt, wahlweise in eine Fixierstellung oder eine Freigabestellung gebracht werden. Die Spanneinrichtung umfasst eine Klemmachse, die sich durch die Langlöcher 330 und die Langlöcher 211 erstreckt. In der Fixierstellung wird von der Spanneinrichtung 5 eine quer zur Längsachse L gerichtete Spannkraft erzeugt, welche die beiden Seitenwangen 33 zusammendrückt, wodurch die Klemmbackenabschnitte 210 des Außenmantelrohrs 22 zusammengedrückt werden und das darin aufgenommene Mantelrohr 21 kraftschlüssig dazwischen festgeklemmt wird. In der Freigabestellung wird die Spannkraft gelöst, und die Stelleinheit 2 kann in Höhenrichtung H und in Längsrichtung verstellt werden.

Wie in der Schnittdarstellung entlang der Achse S in Figur 4 erkennbar ist, ist die Schwenkachse 44 durch die nichtleitenden oder zumindest unzureichend leitende Lagerbuchsen 43 elektrisch isoliert in den Seitenschenkeln 41 Lagerträgers 4 gelagert. Durch ein Leiterelement 45, welches als einstückig mit dem Lagerträger 4 ausgebildete Blechlasche oder - zunge ausgebildet ist, die mit einem Kontaktabschnitt 46 von außen an der Schwenkachse 44 anliegt, wird eine elektrisch leitende Verbindung zwischen dem Lagerträger 4 und der Schwenkachse 44 erzeugt.

Das Leiterelement 45 weist eine schmale, langgestreckte Blechlasche auf, die einstückig mit dem einen Seitenschenkel 41 - in der Schnittdarstellung von Figur 4 links - über eine Umbiegung verbunden ist. In der Umbiegung ist das Leiteelement 45 um eine quer zur Achse S stehende Biegeachse B um einen Biegewinkel von größer 90° umgebogen, so dass das Leiterelement 45 schräg unter flachem Winkel gegen die Achse S zuläuft, so dass es mit dem Kontaktbereich 46 am freien Ende gegen die Schwenkachse 44 anliegt. Der Winkel zwischen dem Leiterelement 45 und der Schwenkachse S ist bevorzugt kleiner 45°, besonders bevorzugt kleiner 20°. Dabei kann die Blechlasche so stark umgebogen sein, dass sie durch ihre Elastizität elastisch federnd den Kontaktbereich 46 mit einer Kontaktkraft F gegen die Außenfläche der Spannachse 44 anpresst. In ihren gegeneinander anliegenden Kontaktflächen sind das Leiterelement 45 und die Spannachse 44 bevorzugt metallisch blank, so dass eine gut leitfähige Masseverbindung mit geringem Übergangswiderstand erzeugt wird. Dadurch, dass die Schwenkachse 44 stirnseitig leitend zwischen den Seitenwangen 32 der Konsole 31 mittels eines Spannelements 100, beispielsweise eines axial hindurchgeführten Schraubbolzens, eingespannt ist, kann eine elektrisch leitende Masseverbindung zwischen der Stelleinheit 2 und der Trageinheit 3 erzeugt werden. Die Lagerbuchsen 43 weisen bevorzugt keinen Kontakt mit den Seitenwangen 32 auf.

### Bezugszeichenliste

- 1: Lenksäule
- 2: Stelleinheit
- 21: Innenmantelrohr
- 22: Außenmantelrohr
- 23: Lenkspindel
- 24: Befestigungsabschnitt
- 3: Trageinheit
- 31: Konsole
- 32: Seitenwange
- 33: Seitenwange
- 4: Lagerträger
- 41: Seitenschenkel
- 42: Lageröffnung
- 43: Lagerbuchse
- 44: Schwenkachse
- 45: Leiterelement
- 46: Kontaktabschnitt
- 5: Spanneinrichtung
- 51: Spannhebel

- L: Längsachse
- S: Querachse
- B: Biegeachse
- F: Kontaktkraft

## Patentansprüche

1. Lenksäule (1) für ein Kraftfahrzeug, umfassend eine zumindest abschnittweise aus elektrisch leitendem Material ausgebildete Stelleinheit (2), in der eine Lenkspindel (23) um eine Längsachse (L) drehbar gelagert ist, wobei die Stelleinheit (2) an einem Schwenklager um eine quer zur Längsachse (L) liegende, mit dem Kraftfahrzeug elektrisch leitend verbindbaren Schwenkachse (44) verschwenkbar gelagert ist, die sich durch eine elektrisch isolierte Lageröffnung (42) eines Lagerträgers (4) der Stelleinheit (2) erstreckt und über ein elektrisch leitfähiges Leiterelement (45) mit der Stelleinheit (2) verbunden ist,
**dadurch gekennzeichnet,**
**dass** das Leiterelement (45) einstückig mit dem Lagerträger (4) ausgebildet ist.

2. Lenksäule nach Anspruch 1, **dadurch gekennzeichnet, dass** der Lagerträger (4) ein metallisches Blechformteil aufweist, und das Leiterelement eine Blechlasche (45) aufweist.

3. Lenksäule nach einem der vorangehenden Ansprüche, **dadurch gekennzeichnet, dass** das Leiterelement (45) elastisch federnd ausgebildet ist.

4. Lenksäule nach einem der vorangehenden Ansprüche, **dadurch gekennzeichnet, dass** das Leiterelement (45) von dem Lagerträger (4) mit Abstand zur Schwenkachse (44) um eine quer zur Schwenkachse (45) liegende Biegekante (B) umgebogen ist.

5. Lenksäule nach einem der vorangehenden Ansprüche, **dadurch gekennzeichnet, dass** der Lagerträger (4) zwei einander bezüglich der Längsachse (L) gegenüberliegende Seitenschenkel (41) aufweist, durch die sich die Schwenkachse (44) erstreckt.

6. Lenksäule nach Anspruch 5, **dadurch gekennzeichnet, dass** das Leiterelement (45) zwischen den Seitenschenkeln (41) angeordnet ist.

7. Lenksäule nach einem der vorangehenden Ansprüche, **dadurch gekennzeichnet, dass** die Schwenkachse (44) in dem Lagerträger (4) in mindestens einer elektrisch isolierenden Lagerbuchse (43) gelagert ist.

8. Lenksäule nach einem der vorangehenden Ansprüche, **dadurch gekennzeichnet, dass** die Schwenkachse (44) rohrförmig ausgebildet ist.

9. Lenksäule nach einem der vorangehenden Ansprüche, **dadurch gekennzeichnet, dass** die Stelleinheit (2) einem Außenmantel (22) aufweist, in dem ein Innenmantel (21) in Richtung der Längsachse (L) teleskopartig verstellbar aufgenommen ist.

## Claims

1. Steering column (1) for a motor vehicle, comprising an adjusting unit (2) which is formed at least in sections from electrically conductive material and in which a steering spindle (23) is mounted rotatably about a longitudinal axis (L), the adjusting unit (2) being mounted on a pivot bearing so as to be pivotable about a pivot axis (44) which is transverse to the longitudinal axis (L) and which is connected to the motor vehicle in an electrically conductive manner and which passes through an electrically insulated bearing opening (42) of a bearing carrier (4) of the adjusting unit (2) and is connected to the actuating unit (2) via an electrically conductive conductor element (45),
**characterized in**
**in that** the conductor element (45) is formed in one piece with the bearing carrier (4).

2. Steering column according to claim 1, **characterized in that** the bearing support (4) has a shaped metal sheet part, and the guide element has a sheet metal tab (45).

3. Steering column according to one of the preceding claims, **characterized in that** the guide element (45) is elastically resilient.

4. Steering column according to one of the preceding claims, **characterized in that** the guide element (45) is bent by the bearing carrier (4) at a distance from the pivot axis (44) about a bending edge (B) lying transversely to the pivot axis (45).

5. Steering column according to one of the preceding claims, **characterized in that** the bearing carrier (4) has two side legs (41) which are opposite one another with respect to the longitudinal axis (L) and through which the pivot axis (44) extends.

6. Steering column according to claim 5, **characterized in that** the guide element (45) is arranged between the side legs (41).

7. Steering column according to one of the preceding claims, **characterized in that** the pivot axle (44) is mounted in the bearing carrier (4) in at least one electrically insulating bearing bush (43).

8. Steering column according to one of the preceding claims, **characterized in that** the pivot axle (44) is tubular.

9. Steering column according to one of the preceding claims, **characterized in that** the adjusting unit (2) has an outer casing (22) in which an inner casing (21) is accommodated so as to be telescopically adjustable in the direction of the longitudinal axis (L).

## Revendications

1. Colonne de direction (1) pour un véhicule automobile, comprenant une unité de réglage (2) réalisée au moins par sections en un matériau électriquement conducteur, dans laquelle un arbre de direction (23) est monté de manière à pouvoir tourner autour d'un axe longitudinal (L), l'unité de réglage (2) étant montée sur un palier de pivotement autour d'un axe transversal à l'axe longitudinal (L), axe de pivotement (44) pouvant être relié de manière électriquement conductrice au véhicule automobile, qui s'étend à travers une ouverture de palier (42) électriquement isolée d'un support de palier (4) de l'unité de réglage (2) et qui est relié à l'unité de réglage (2) par un élément conducteur (45) électriquement conducteur,
**caractérisé en ce que**
**en ce que** l'élément conducteur (45) est réalisé d'une seule pièce avec le support de palier (4).

2. Colonne de direction selon la revendication 1, **caractérisée en ce que** le support de palier (4) présente une pièce de forme en tôle métallique, et l'élément conducteur présente une patte en tôle (45).

3. Colonne de direction selon l'une des revendications précédentes, **caractérisée en ce que** l'élément conducteur (45) est réalisé de manière élastique.

4. Colonne de direction selon l'une des revendications précédentes, **caractérisée en ce que** l'élément conducteur (45) est replié par le support de palier (4) à distance de l'axe de pivotement (44) autour d'une arête de pliage (B) transversale à l'axe de pivotement (45).

5. Colonne de direction selon l'une des revendications précédentes, **caractérisée en ce que** le support de palier (4) présente deux branches latérales (41) opposées l'une à l'autre par rapport à l'axe longitudinal (L), à travers lesquelles s'étend l'axe de pivotement (44).

6. Colonne de direction selon la revendication 5, **caractérisée en ce que** l'élément conducteur (45) est disposé entre les branches latérales (41).

7. Colonne de direction selon l'une des revendications précédentes, **caractérisée en ce que** l'axe de pivotement (44) est logé dans le support de palier (4) dans au moins un coussinet (43) électriquement isolant.

8. Colonne de direction selon l'une des revendications précédentes, **caractérisée en ce que** l'axe de pivotement (44) est de forme tubulaire.

9. Colonne de direction selon l'une des revendications précédentes, **caractérisée en ce que** l'unité de réglage (2) présente une enveloppe extérieure (22) dans laquelle est logée une enveloppe intérieure (21) réglable de manière télescopique dans la direction de l'axe longitudinal (L).
